# EUROPÄISCHE PATENTSCHRIFT

(11) **EP 4 236 266 B1**
(45) Veröffentlichungstag und Bekanntmachung des Hinweises auf die Patenterteilung: **04.11.2026**
(21) Anmeldenummer: 22198220.0
(22) Anmeldetag: 27.09.2022
(51) Int. Cl.: H04L 67/12, H04L 45/28, H04L 47/24, H04L 45/00

(54) **BETREIBEN EINES UNIVERSELLEN DATENTRANSPORTSYSTEMS**
OPERATING A UNIVERSAL DATA TRANSPORT SYSTEM
FONCTIONNEMENT D'UN SYSTÈME DE TRANSPORT DE DONNÉES UNIVERSEL

(43) Veröffentlichungstag der Anmeldung: 30.08.2023
(73) Patentinhaber: INOVA Semiconductors GmbH, 81379 München (DE)
(72) Erfinder: Neumann, Roland, 83646 Bad Toelz (DE); Kluge, Fabian, 94366 Perasdorf (DE)
(74) Vertreter: Reich, Jochen

(56) Entgegenhaltungen:
- US-A1- 2017 019 479
- US-B1- 10 362 117

## Beschreibung

Die vorliegende Erfindung ist auf ein Verfahren zum Betreiben eines universellen Datentransportsystems gerichtet, welches speziell für Fahrzeugarchitekturen konzipiert wurde, da hier besondere Einschränkungen vorherrschen. Das vorgeschlagene Verfahren bzw. das Datentransportsystem stellt darauf ab, dass besonders hardwareeffizient Daten transportiert werden können. Diese Hardwareeffizienz spiegelt sich darin wider, dass beispielsweise lediglich ein physischer Datenkanal notwendig ist und die entsprechenden Komponenten mit geringer Komplexität bereitzustellen sind. Die vorliegende Erfindung ist ferner gerichtet auf ein Datentransportsystem, welches das vorgeschlagene Verfahren ausführt beziehungsweise auf ein Computerprogrammprodukt mit Steuerbefehlen, welches das Verfahren ausführen beziehungsweise das Datentransportsystem betreiben. Darüber hinaus wird ein computerlesbares Speichermedium vorgeschlagen.

US 2017/0019479 A1 zeigt eine Kommunikation in Kommunikationsnetzen, insbesondere für ein flexibles deterministisches Kommunikationsnetzwerk und eine Methode zur Verwendung in einem Fahrzeug, z. B. einem Flugzeug, einem Raumschiff oder einem Schiff oder einem anderen Fahrzeug.

US 10,362,117 B1 zeigt Netzwerkschnittstellengeräte umfassend eine Konfigurations-Engine, eine Modusänderungsmaschine und einen Schalter.

Aus dem Stand der Technik sind unterschiedliche Video- Schnittstellen bekannt, welche typischerweise dafür optimiert sind, dass über ein Computernetzwerk Daten übertragen werden und sodann auf einem herkömmlichen Endgerät ausgegeben werden. Hierbei geht der Stand der Technik typischerweise davon aus, dass leistungsstarke Rechnersysteme zur Verfügung stehen und stets ausreichend Bandbreite verfügbar ist. Darüber hinaus stellen entsprechende Techniken nicht auf die Energieeffizienz ab. Die Energieeffizienz spielt in Computersystemen typischerweise eine untergeordnete Rolle, wobei lediglich eine Temperaturentwicklung und der Abtransport von Wärme zu berücksichtigen sind. Im Automobil hingegen verringert jedoch die Energieaufnahme direkt die Reichweite eines elektrisch angetriebenen Automobils.

Bekannte Schnittstellen wie beispielsweise Displayport oder HDMI unterstellen dem zugrunde liegenden Datenkanal typischerweise eine hohe Bandbreite und sind nicht auf Latenzzeiten optimiert.

Andere Übertragungssysteme aus dem Stand der Technik gehen ebenfalls von einer hoch bandbreitigen Datenverbindung aus und übermitteln Datenpakete über weite Strecken. Techniken, die beim heutigen Internetanwendung finden arbeiten typischerweise paketbasiert und überwinden große geographische Strecken mittels eines dynamischen Routings. Dies impliziert leistungsstarke Netzwerkknoten, die zur Laufzeit einen optimalen Datenpfad durch ein weiträumiges Computernetzwerk finden. Im Automobil entstehen jedoch ganz andere Anforderungen, da schon die räumliche Ausdehnung geringer ist und oftmals Daten sicherheitsrelevant sind. Insofern sind Techniken aus dem Stand der Technik oftmals nicht anwendbar da erhöhte Sicherheitsanforderungen und Echtzeitanforderungen bestehen.

Die beispielhaft aufgeführten Interfaces sind jeweils optimiert auf bestimmte Anwendungsfälle (Datentypen). Je nach Art der Schnittstelle bieten diese entweder oder (aber nicht simultan):
- Niedrige Latenz bei unidirektionaler Point-to-Point oder Multipoint Verbindung einer spezifischen Applikation kleiner gleich 16 Knoten (Consumer Video Interfaces: DP/HDMI/DSI/CSI/LVDS)
- Niedrige Latenz bei bidirektionaler Point-to-Point oder Multipoint Verbindung mit einem festen Frame-Format (und damit fest allokierter Bandbreite) um Latenzanforderungen gerecht zu werden (APIX2/APIX3)
- Hohe Latenz bei Point-to-Point und Multipoint Verbindungen mit dafür hoher Flexibilität (Ethernet, TDM)

Es können bei den exemplarisch genannten Schnittstellen folgende Anforderungen nicht simultan erfüllt werden:
- Niedrigste Latenz (durch mögliche Priorisierung)
- Dynamisch allokierte Bandbreite (kein festes Frame-Format)
- Bidirektionale Datenströme
- (Multi-Master-)Multipoint Datenströme > 16 Knoten
- Bündelung aller denkbaren Datentypen
- Gateway Funktion steht überall im Netzwerk zur Verfügung
- Möglichst geringer Protokoll Overhead

Die zeitgleiche Kombination aller genannten Eigenschaften ist als universelles Datentransportsystem für neue Fahrzeugarchitekturen wünschenswert, da dies sowohl die steigende Komplexität als auch den wachsenden Anforderungen an Bandbreite gerecht wird. Dies ist aktuell nicht möglich.

Es besteht Bedarf ein Verfahren vorzuschlagen, welches es speziell in Fahrzeugarchitekturen ermöglicht, unabhängig von einem Datentyp effizient Daten zu übertragen. Das vorgeschlagene Verfahren soll bewerkstelligen, dass lediglich ein geringer technischer Aufwand möglich ist bzw. dass unabhängig von bereitgestellten Datenformaten ein Datentransport über mehrere Netzwerkknoten erfolgen kann, wobei die Netzwerkknoten eine geringe Komplexität aufweisen und die strukturellen Merkmale ein geringes Gewicht aufweisen. Es ist ferner eine Aufgabe der vorliegenden Erfindung ein entsprechend eingerichtetes Datentransportsystem bereitzustellen, sowie ein Computerprogrammprodukt und ein computerlesbares Speichermedium.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum Betreiben eines universellen Datentransportsystems für Fahrzeugarchitekturen vorgeschlagen, aufweisend ein Unterteilen mindestens eines physischen Datenkanals in jeweils eine Mehrzahl von virtuellen Datenkanälen, wobei die virtuellen Datenkanäle jeweils ausschließlich für kontinuierliche oder diskontinuierliche Datensätze eingerichtet werden; ein Auslesen von Nutzdaten in einem Sender des Datentransportsystems ein Hinzufügen von Beschreibungsdaten, welche die Nutzdaten beschreiben, zu den Nutzdaten gemäß einem Zieldatenformat zur Erstellung mindestens eines Datensatzes; ein Übersenden des mindestens einen Datensatzes mittels der virtuellen Datenkanäle von dem Sender zu einem Empfänger anhand einer statischen Adressierung; und ein Empfangen des mindestens einen Datensatzes in dem Empfänger und Auslesen der Nutzdaten zu deren Verwendung.

Das im Folgenden aufgestellte Datentransportsystem kann gemäß einem Aspekt der vorliegenden Erfindung alle oben genannten Anforderungen zeitgleich kombinieren.

Die gewünschten Eigenschaften werden gemäß einem Aspekt der vorliegenden Erfindung erreicht durch:
- 128 virtuelle Datenpfade denen jeweils dynamisch Bandbreite zugewiesen wird (basierend auf Priorisierung), die nur dann Bandbreite benötigen, wenn Daten übertragen werden.
- Zwei generischer Application-Adaption Units für Burst und Stream Daten, die es ermöglichen alle denkbaren Schnittstellen zu integrieren
- Für Sende- und Empfangspfad jeweils eine Segmentation bzw. Reassembly Unit die den Übergang von Applikationsdaten in das einheitliche Zellformat ermöglicht
- Einem Service-Independent Peer-to-Peer Interface auf dem Cell Layer, das eine Low-Latency Repeater/Routing Funktionalität in alle Richtungen ermöglicht. Diese ist nötig für das beliebige Weiterleiten (Routen) der individuellen virtuellen Datenpfade
- Eine Crossbar Unit für Cell Merge (TX Pfad) oder Cell Separation (RX Pfad)
- Full-Duplex Auslegung jedes seriellen Interfaces: Alle virtuellen 128 Kanäle können bei Bedarf in einem Full-Duplex Modus betrieben werden
- Die Möglichkeit serielle Interfaces für mehr Bandbreite mehrfach (x2 x3 x4 ...) anzulegen. Es ist auch möglich einen asymmetrischen Aufbau zu nutzen z.B. zwei TX-PHYs und nur einen RX-PHY (Doppelte Bandbreite im Downstream, Upstream bleibt unberührt).

Damit wird es möglich Burst- und Stream-Daten bei niedrigster Latenz zu bündeln. Dies wiederum ermöglicht, durch den bidirektionalen Aufbau, eine simultane Bündelung einer Vielzahl von Interfaces über mehrere Funktionseinheiten in beliebiger Richtung mit beliebigen Einspeise- und Ausgabepunkten.

Das vorgeschlagene Verfahren zum Betreiben des Datentransportsystems stellt darauf ab, dass das Datentransportsystem universell bezüglich der zu übersendeten Nutzdaten ist. So ist es erfindungsgemäß möglich, dass bei einer Datenübertragung eines beliebigen Datenformats die Nutzdaten extrahiert werden und sodann gegebenenfalls neu verpackt werden und weitergesendet werden. Typischerweise weisen in einem Computernetzwerk übersendete Daten Überhangdaten auf, sogenannte Overhead. Diese Daten können beispielsweise Rahmendaten bzw. Headerdaten oder Footerdaten sein. Diese sind formatspezifisch, während die Nutzdaten die eigentliche Information beinhalten. Erfindungsgemäß wird also ein Verfahren vorgeschlagen, welches die Überhangdaten von den Nutzdaten separiert und somit für universelle Datenformate geeignet ist. Es kann also potenziell jedes beliebige Datenformat in ein weiteres Datenformat überführt werden.

Das vorgeschlagene Datentransportsystem weist mehrere Netzwerkknoten auf, welches mittels serieller Datenkanäle, beispielsweise einem Kabel, verbunden sind. Hierbei ist die Topologie statisch, das heißt es erfolgt kein dynamisches Routing bzw. Adressierung, da vorab die Netzwerktopologie bekannt ist und hierauf aus Effizienzgründen verzichtet werden kann.

Gemäß dem vorgeschlagenen Verfahren wird ein physischer Datenkanal betrieben, der in eine Mehrzahl von virtuellen Datenkanälen unterteilt wird. Vorzugsweise wird ein physischer Datenkanal in 128 virtuelle Kanäle unterteilt. Generell ist es auch möglich mehrere physische Datenkanäle bereitzustellen, die dann wiederum in virtuelle Datenkanäle aufgespalten werden. Generell ist es auch möglich für eine erste Kommunikationsrichtung eine erste Anzahl an physischen Datenkanälen bereitzustellen und für eine zweite Kommunikationseinrichtung eine zweite Anzahl an physischen Datenkanälen. Wie physische Datenkanäle in virtuelle Datenkanäle unterteilt werden, ist hinreichend bekannt, wobei jedoch erfindungsgemäß vorgeschlagen wird, dass die virtuellen Datenkanäle untereinander unabhängig angesprochen werden können.

So ist es erfindungsgemäß möglich, die virtuellen Datenkanäle derart zu betreiben, dass diese unterschiedliche Bandbreiten und implizit unterschiedliche Latenzzeiten aufweisen. Darüber hinaus können einzelne Datenkanäle priorisiert werden.

Darüber hinaus erfolgt ein Auslesen von Nutzdaten in einem Sender des Datentransportsystems, was derart erfolgen kann, dass die Nutzdaten aus einer Datenquelle ausgelesen werden oder aber der Sender hat vormals als Empfänger agiert und die Nutzdaten wurden übermittelt. Das Auslesen von Nutzdaten kann auch beinhalten, dass die Nutzdaten aus einem Datenstrom ausgelesen werden, wobei auch Überhangdaten, zum Beispiel Rahmendaten übermittelt wurden. Das Auslesen der Nutzdaten entspricht dann einem Entnehmen der Nutzdaten aus einem größeren Datensatz, der übermittelt wurde. Wie die Nutzdaten aus dem Datenstrom bzw. aus Datenpaketen entnommen werden, kann gemäß der Überhangdaten bestimmt werden. Die Nutzdaten werden beispielsweise in einem gewissen Datenformat übermittelt, wobei das Datenformat an sich Information darüber bereitstellt, wo die Nutzdaten innerhalb der übermittelten Gesamtdaten zu entnehmen sind. Darüber hinaus kann das Auslesen von Nutzdaten weitere Komponenten implizieren, wie beispielsweise ein Auslesen eines Messfühlers oder das Auslesen eines Datenspeichers, beispielsweise eines flüchtigen Datenspeichers.

In einem darauffolgenden Verfahrensschritte erfolgt ein Hinzufügen von Beschreibungsdaten zu den Nutzdaten gemäß einem Zieldatenformats zur Erstellung mindestens eines Datensatzes. Die Beschreibungsdaten geben Aufschluss über den Inhalt der Nutzdaten beziehungsweise beschreiben die Nutzdaten. Während die Nutzdaten die generischen Rohdaten beschreiben, sind die Beschreibungsdaten dazu da Metadaten bereitzustellen, welche sich in irgendeiner Weise auf die Nutzdaten beziehen. Vorliegend ist es nicht notwendig, dass Adressierungsdaten vorliegen, da erfindungsgemäß eine statische Adressierung stattfindet. Das Zieldatenformat kann von einem Netzwerkknoten des Datentransportsystems vorgegeben sein und bestimmt, welches Datenformat ein Empfänger der Beschreibungsdaten und den Nutzdaten auslesen kann. Aus dem Zieldatenformat wird auch klar, welche Beschreibungsdaten zu den Nutzdaten hinzuzufügen sind. Der entstehende Datensatz entspricht sodann dem Zieldatenformat und weist optional Beschreibungsdaten auf und weist zudem die Nutzdaten auf.

Danach erfolgt ein Übersenden des mindestens einen Datensatzes mittels der virtuellen Datenkanäle bzw. mindestens eines Datenkanals. Bei dem Übersenden des mindestens einen Datensatzes von dem Sender zu dem Empfänger wird keine Adressierungsinformation bzw. dynamisches Routing verwendet, sondern vielmehr erfolgt erfindungsgemäß ein statisches Routing bzw. eine statische Adressierung. Dies ist besonders bei einer Systemarchitektur in einem Automobil vorteilhaft, da hier vorab alle Netzwerkknoten bekannt sind bzw. dies in einem Initialisierungsschritt in Erfahrung gebracht werden kann. Die Netzwerkknoten sind fest verdrahtet und insofern kann auch eine statische Adressierung vorgegeben werden. Dies schafft den Vorteil, dass die Komplexität der einzelnen Netzwerkknoten gering ausgestaltet werden kann und sich somit eine Fehlerrobustheit und ein leichteres Gewicht einstellen.

Das statische Adressieren kann für jeden physischen Datenkanal erfolgen oder aber auch für jeden virtuellen Datenkanal. So kann eine Adressierungsinformation angegeben werden, welche den Zielnetzwerkknoten angibt. Generell ist es möglich, dass in jedem Netzwerkknoten entschieden wird, an welchen Folgeknoten der Datensatz übermittelt wird, dies ist jedoch immer statisch vorgegeben. Ein Alternieren der Datenpfade in den Netzwerkknoten ist nicht vorgesehen. So erfolgt also eine Adressierung bzw. ein Routing, dies ist jedoch statisch und variiert nicht über die Laufzeit.

Nach dem Übersenden des mindestens einen Datensatzes erfolgt ein Empfangen des mindestens einen Datensatzes bei dem Empfänger, welcher ebenfalls einen Netzwerkknoten des Datentransportsystems darstellt. Hierauf erfolgt ein Auslesen der Nutzdaten zu deren Verwendung, was bedeuten kann, dass die Nutzdaten mittels einer Ausgabeeinheit ausgegeben werden oder aber diese werden weiterverarbeitet. Die Weiterverarbeitung kann darin bestehen, dass die ausgelesenen Nutzdaten wiederum mit Beschreibungsdaten angereichert werden und der Empfänger übernimmt die Rolle des Senders und übersendet die angereicherten Nutzdaten an einen weiteren Empfänger.

Gemäß einem Aspekt vorliegender Erfindung ist die Anzahl der virtuellen Datenkanäle je physischen Datenkanal maximal 128. Dies hat den Vorteil, dass das vorgeschlagene Verfahren besonders vorteilhaft ausgeführt werden kann, da 128 virtuelle Datenkanäle sicherstellen, dass ausreichend Bandbreite für jeden Datenkanal vorhanden ist und zudem eine geeignete Bitlänge vorhanden ist, die sich bezüglich der Disparität besonders vorteilhaft ausnutzen lässt. So wurde herausgefunden, dass sich 112 Bit besonders vorteilhaft bezüglich einer Bitlänge von 128 kodieren lassen, was einem minimalen Overhead entspricht. Dies greift die vorliegende Erfindung auf und schafft Datenkanäle von bis zu 128 Stück je physischen Datenkanal.

Gemäß einem weiteren Aspekt vorliegender Erfindung wird für jeden virtuellen Datenkanal gesondert eine Bandbreite allokiert. Dies hat den Vorteil, dass je nach Anwendungsszenario die Datenkanäle unterschiedlich eingestellt werden können und so können auch einzelne Datenkanäle priorisiert werden, indem ihnen eine höhere Bandbreite zugewiesen wird. Dass Allokieren der Bandbreite kann auch dynamisch zur Laufzeit erfolgen.

Gemäß einem weiteren Aspekt vorliegender Erfindung werden alle virtuellen Datenkanäle mindestens zeitweise in einem Duplexmodus betrieben. Dies hat den Vorteil, dass sowohl ein Simplexmodus möglich ist, wobei jedoch zu jeder Zeit bzw. mindestens zeitweise in einen vollen Duplexmodus geschalten werden kann. Das heißt dass die Datenkanäle, seien es physische Datenkanäle oder virtuelle Datenkanäle, in einem bidirektionalen Modus betrieben werden, sodass Daten gleichzeitig in beide Richtungen gesendet werden können.

Gemäß einem weiteren Aspekt der vorliegenden Erfindung liegen je Kommunikationsrichtung physische und/ oder virtuelle Datenkanäle unterschiedlicher Anzahl vor. Dies hat den Vorteil, dass bei einer gerichteten Datenkommunikation gerichtete physische und/ oder virtuelle Datenkanäle vorliegen können, die nicht gleich sein können. So kann darauf abgestellt werden, dass mehr Daten stromaufwärts oder stromabwärts gesendet werden müssen, und insofern kann die entsprechende Kommunikationsrichtung entsprechend verstärkt werden. Es wird also jeweils diejenige Übertragungskapazität geschaffen, die in dem vorliegenden Anwendungsszenario gefordert wird.

Gemäß einem weiteren Aspekt der vorliegenden Erfindung werden virtuelle Datenkanäle ausschließlich für kontinuierliche oder diskontinuierliche Datensatz eingerichtet. Dies hat den Vorteil, dass einzelne Schnittstellen bzw. Datenkanäle entweder für Streamingdaten oder für Burstdaten vorgesehen sind. Somit können besonders effiziente strukturelle Merkmale geschaffen werden bzw. das Verfahren kann auf diese strukturellen Merkmale zurückgreifen. Beispielsweise können die Pufferspeicher bei kontinuierlichen Daten größer ausgelegt werden als bei diskontinuierlichen Daten. Entsprechend größer können auch die Bandbreiten für kontinuierliche Daten auf dem Datenkanal gewählt werden.

Gemäß einem weiteren Aspekt der vorliegenden Erfindung werden virtuelle Datenkanäle unabhängig voneinander priorisiert. Dies hat den Vorteil, dass auch dynamisch zur Laufzeit die Bandbreite eingestellt werden kann bzw. es können auch Datenkanäle gebündelt werden. Darüber hinaus können Latenzzeiten vorgegeben werden, die einzuhalten sind und die Datenkanäle werden entsprechend beaufschlagt bzw. eingerichtet.

Gemäß einem weiteren Aspekt vorliegenden Erfindung agieren Netzwerkknoten des Datentransportsystems wechselnd als Sender oder Empfänger. Dies hat den Vorteil, dass die Rolle des Senders oder des Empfängers von Netzwerkknoten wechselseitig übernommen werden kann, sodass sich unterschiedliche Netzwerktopologien schaffen lassen. So ist es möglich, dass es Netzwerkknoten gibt, die nur Datenquellen darstellen also Sender darstellen bzw. Netzwerkknoten, die nur Datensenken darstellen, also Datenempfänger. Hierüber hinaus kann es auch Adressierungsnetzwerkknoten geben, die sowohl als Sender als auch als Empfänger agieren.

Gemäß einem weiteren Aspekt vorliegenden Erfindung werden die Nutzdaten in dem Empfänger mittels einer Ausgabeeinheit ausgegeben und/ oder der Empfänger stellt eine Datensenke dar. Dies hat den Vorteil, dass einzelne Netzwerkknoten nur Daten empfangen können und diese geben die Daten beispielsweise mittels eines Bildschirms und/ oder eines Lautsprechers aus und generieren selbst keine eigenen Daten. Solche Netzwerkknoten können dann als Datensenke bezeichnet werden.

Gemäß einem weiteren Aspekt der vorliegenden Erfindung verwendet das Verfahren ausschließlich flüchtige Speicher. Dies hat den Vorteil, dass keine Daten persistent gespeichert werden und insofern müssen die Netzwerkkomponenten bzw. die Netzwerkknoten auch nicht komplex ausgestaltet werden. Flüchtige Speicher sind typischerweise schneller und effizienter als persistente Speicher. Dies stellt auf das Anwendungsszenario im Automobil ab, welches besonders einfach ausgestaltete Komponenten verlangt.

Gemäß einem weiteren Aspekt vorliegenden Erfindung wird innerhalb der Sender ein bidirektionales Routing durchgeführt. Dies hat den Vorteil, dass es einzelne Netzwerkknoten gibt, die als Router bzw. Adressierungseinheiten oder aber auch als sogenannte Gateway- Router dienen.

Gemäß einem weiteren Aspekt der vorliegenden Erfindung liegen die Nutzdaten als Videodaten und/ oder Audiodaten vor. Dies hat den Vorteil, dass ein Verfahren geschaffen wird, welches speziell auf die Anforderungen im Automobil eingeht und hierbei auch größere Datenmengen effizient übertragen werden können. Die Erfindung kann mit diesen Daten besonders vorteilhaft ausgeführt werden, da durch die statische Adressierung auch hohe Datenmengen effizient übertragen werden können und es hierbei keine hohen Latenzzeiten gibt. So können diese Echtzeitanwendungen im vorliegenden Verfahren besonders vorteilig übertragen werden, da Videodaten und Audiodaten stets kontinuierlich übertragen werden müssen.

Ein Aspekt der vorliegenden Erfindung ist es, mehrere Datenströme (Video, Audio und Daten) in einem Transportframe zu bündeln und seriell zu übertragen. Die unterschiedlichen Datenformate haben nicht nur unterschiedliche Bandbreitenanforderungen, sondern auch unterschiedliche Latenz-, Reassembly Teilschicht- und Bitfehlerratenanforderungen. Insbesondere die Übertragung heutiger Videodatenformate erfordert nicht nur die Übertragung der reinen Videodaten und deren Frame-Informationen, sondern auch die Unterstützung von Verschlüsselungsverfahren wie HDCP. All dies erfordert viele unterschiedliche Datenkanäle mit unterschiedlichsten Anforderungen an Bandbreite, Latenz, Reassembly Teilschicht etc. Hinzu kommt der Wunsch nach weitaus komplexeren Netzwerkarchitekturen als eine einfache Sender-Empfänger-Architektur bietet. Architekturen mit mehreren Repeatern, wo Datenpfade beginnen und enden können, Verzweigungen (Y) auch mit der Möglichkeit, Datenpfade wieder in einen Link zu integrieren, sind vorteilhaft.

Die Technologie folgt gemäß einem Aspekt der vorliegenden Erfindung dem Grundgedanken mehrere Dienste ganz konsequent zu bündeln, bietet aber völlig neue Möglichkeiten hinsichtlich Netzwerkarchitekturen und erlaubt neue Ansätze bei der Implementierung heutiger Videoschnittstellen. Darüber hinaus kann es als universeller Datentransportschicht verwendet werden, beispielsweise auch zur Übertragung von Ethernet- oder Kameradaten oder jeglicher Art von Sensordaten.

Bei einem virtuellen Pfad nehmen alle Pakete/ Zellen denselben Pfad, im Gegensatz zu IP, wo ein Paket sein Ziel über eine andere Route erreichen könnte als vorherige und nachfolgende Pakete. Latenz und Reassembly Sublayer über einen virtuellen Pfad sind somit konstant.

Virtuelle Pfade haben außerdem den Vorteil, dass sie als Multiplexing- Schicht für unterschiedliche Dienste (Video, Audio, Ethernet) verwendet werden können, da die Eigenschaften der virtuellen Pfade unterschiedlich konfiguriert werden können, ohne dass sich die verschiedenen virtuellen Pfade gegenseitig stören.

Virtuelle Pfade verbrauchen nur dann Bandbreite, wenn tatsächlich Daten übertragen werden.

Das Konzept der virtuellen Pfade ermöglicht es auch, komplexe und weitreichende Diagnose- und Netzwerkkonfigurationsfunktionen zur Laufzeit mit eigenen (virtuellen) Datenkanälen zu realisieren.

Gemäß einem Aspekt der vorliegenden Erfindung wird eine Virtual Path Schicht zwischen der physikalischen Schicht (Serializer und Framer) und den verschiedenen Anwendungsdatenschnittstellen implementiert.

Diese wird gemäß einem Aspekt der vorliegenden Erfindung verwendet, um die verschiedenen Datenpfade zu Multiplexen und komplexere Architekturen mit Repeatern und Verzweigungen zu unterstützen. Dies geschieht hauptsächlich in der Zellschicht.

Ein weiterer Teil der Virtual Path Schicht ist gemäß einem Aspekt der vorliegenden Erfindung ein Anwendungsanpassungsschicht, die die Konvertierung von Video (Stream) oder z.B. Ethernet-(Paket-)Daten in die Zellen vornimmt. Diese Anwendungsanpassungsschicht umfasst auch die OAM-Funktionen für die Netzwerkdiagnose und -verwaltung.

Die Technologie kann gemäß einem Aspekt der vorliegenden Erfindung die Grundlage für die Übertragung einer Vielzahl von Datenformaten über eine serielle Verbindung im Auto (und anderswo) sein. Es bildet damit die Basis für eine neue Gerätegeneration.

Die hohen seriellen Bandbreiten machen es erforderlich, Architekturen, Zellformate und Schnittstellen zu definieren, die flexible interne Datenbusbreiten ermöglichen, um die Geschwindigkeit des internen Taktsystems an die Möglichkeiten der Chiptechnologie anzupassen.

Die Virtual Path Schicht beinhaltet gemäß einem Aspekt der vorliegenden Erfindung die physikalische Schicht, die aus der Übertragungsteilschicht und der Teilschicht des physikalischen Mediums besteht, die Zellschicht und die Anwendungsanpassungsschicht, die die Segmentierungs- und Reassembly Sublayer und die Funktionen zum Anpassen der Datenformate an die entsprechende Anwendung enthält.

Die Hauptaufgabe der physikalischen Schicht besteht darin, die physikalische Verbindung zu anderen physikalischen Schichten herzustellen. Diese Verbindung ist grundsätzlich bidirektional zu verstehen. Theoretisch lässt sich diese Verbindung über verschiedenste Medien realisieren. Praktisch werden zwei serielle differenzielle GBps-Verbindungen verwendet. In dieser Schicht erfolgen die Leitungskodierung, das Einfügen von Leerzellen zur Entkopplung der Zellenrate von der Verbindungsrate und die Integration des Zellenstroms in den seriellen Rahmen.

In der Zellschicht werden die segmentierten Daten (Zell-Nutzdaten) der darüber liegenden Segmentation & Reassembly-Unterschicht mit Header, VP-Kennung und CRC zu vollständigen Zellen zusammengesetzt oder Zellen werden CRC-geprüft und die Nutzlast wird an die Segmentierungs- und Reassembly-Teilschicht weitergegeben. Hier erfolgt auch das Multiplexen der unterschiedlichen Zellströme der Anwendungsanpassungsfunktionen bzw. die Verteilung der Zellnutzlasten auf die Anwendungsanpassungsfunktionen gemäß dem VP Identifier. (Einspeisen / Ausspeisen)

In der Zellschicht erfolgt gemäß einem Aspekt der vorliegenden Erfindung auch das Multiplexing und Demultiplexing von Zellströmen in Repeatern und Splittern (Forwarding).

Die Aufgabe der Anwendungsanpassungsfunktionen besteht gemäß einem Aspekt der vorliegenden Erfindung darin, die Daten der Anwendungsschnittstellen an das Format des Nutzdatenfeldes der Zelle anzupassen und Steuerinformationen an die Gegenseite zu übermitteln bzw. Steuerinformationen der Gegenseite für die zu verwenden Anpassung (Zeitgenerierung, Rahmenbildung).

Gemäß einem Aspekt der vorliegenden Erfindung sind alle virtuellen Datenpfade unidirektional, d.h. sie beginnen bei einem Initiator und enden bei einem oder mehreren Zielen. Wenn virtuelle Datenpfade logisch zusammengehören, z. HDCP für einen Videokanal, und somit einen bidirektionalen Datenpfad bilden, sollten diese Pfade dieselben VP-Kennungen haben.

Der virtuelle Datenpfad beginnt bei einem Initiator und endet bei einem oder mehreren Zielen. Die Realisierung erfolgt durch die

Zellteilschicht und führt die folgenden Funktionen auf dem virtuellen Pfad aus:
- Multiplexing hinzufügen/ löschen
- VP-Übersetzung

Die Aufgabe wird auch gelöst durch ein Datentransportsystem für Fahrzeugarchitekturen aufweisend eine Unterteilungseinheit eingerichtet zum Unterteilen mindestens eines physischen Datenkanals in jeweils eine Mehrzahl von virtuellen Datenkanälen, wobei die virtuellen Datenkanäle jeweils ausschließlich für kontinuierliche oder diskontinuierliche Datensätze eingerichtet werden; eine Schnittstelleneinheit eingerichtet zum Auslesen von Nutzdaten in einem Sender des Datentransportsystems; eine Paketierungseinheit eingerichtet zum Hinzufügen von Beschreibungsdaten, welche die Nutzdaten beschreiben, zu den Nutzdaten gemäß einem Zieldatenformat zur Erstellung mindestens eines Datensatzes; eine Sendeschnittstelleneinheit eingerichtet zum Übersenden des mindestens einen Datensatzes mittels der virtuellen Datenkanäle von dem Sender zu einem Empfänger anhand einer statischen Adressierung; und eine Empfangsschnittstelleneinheit eingerichtet zum Empfangen des mindestens einen Datensatzes in dem Empfänger und Auslesen der Nutzdaten zu deren Verwendung.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm eines Verfahrens zum Betreiben eines universellen Datentransportsystems gemäß einem Aspekt der vorliegenden Erfindung;
- Figur 2:: ein exemplarisches Netzwerk basierend auf definierten Funktionseinheiten der vorgeschlagenen Systemanordnung gemäß eines weiteren Aspekts der vorliegenden Erfindung; und
- Figur 3:: das vorgeschlagene Datentransportsystem gemäß eines weiteren

### Aspekts der vorliegenden Erfindung.

Die vorliegenden Figuren weisen teilweise Parameter auf, welche dem Fachmann in der englischen Bezeichnung so geläufig sind und welche als Parameter verwendet werden und so nicht zu übersetzen sind.

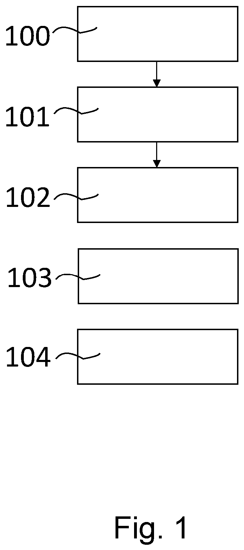

Figur 1 zeigt in einem schematischen Ablaufdiagramm ein Verfahren zum Betreiben eines universellen Datentransportsystems für Fahrzeugarchitekturen, aufweisend ein Unterteilen 100 mindestens eines physischen Datenkanals in jeweils eine Mehrzahl von virtuellen Datenkanälen, wobei die virtuellen Datenkanäle jeweils ausschließlich für kontinuierliche oder diskontinuierliche Datensätze eingerichtet werden; ein Auslesen 101 von Nutzdaten in einem Sender des Datentransportsystems; ein Hinzufügen 102 von Beschreibungsdaten, welche die Nutzdaten beschreiben, zu den Nutzdaten gemäß einem Zieldatenformat zur Erstellung mindestens eines Datensatzes; ein Übersenden 103 des mindestens einen Datensatzes mittels der virtuellen Datenkanäle von dem Sender zu einem Empfänger anhand einer statischen Adressierung; und ein Empfangen 104 des mindestens einen Datensatzes in dem Empfänger und Auslesen der Nutzdaten zu deren Verwendung.

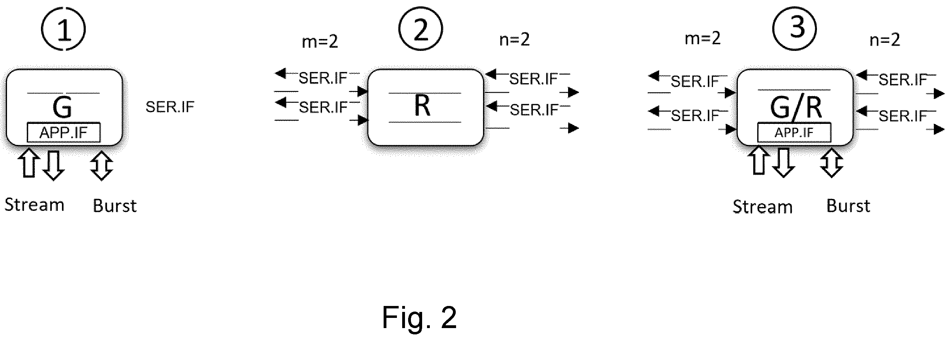

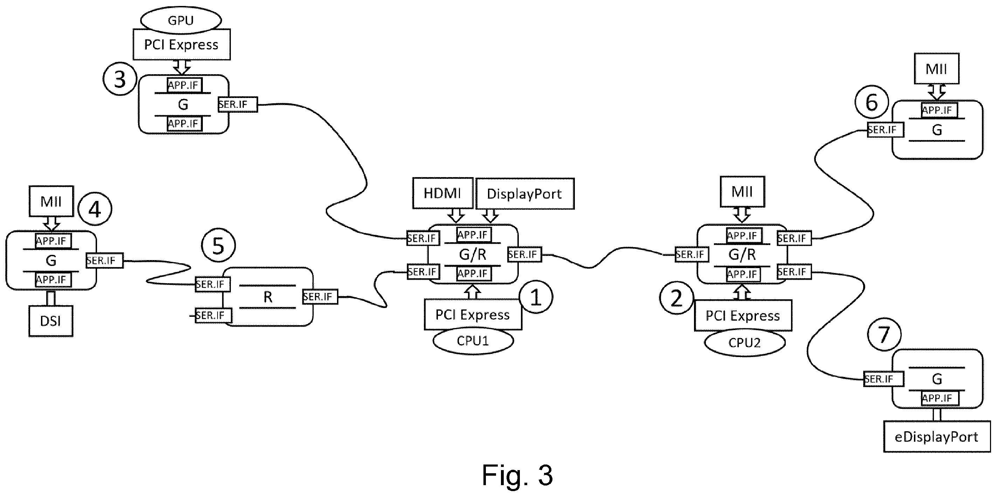

Figur 2 zeigt unterschiedliche Netzwerkknoten der vorgeschlagenen Datentransportanordnung bzw. des Datentransportsystems. Die Netzwerkknoten können als Sender und/ oder Empfänger agieren und können zudem als Datenquelle bzw. Datensenke agieren. Darüber hinaus sind in der linken Komponente Eingänge und einen Ausgang eingezeichnet, für Streamingdaten, also kontinuierliche Daten, und Brustdaten, also diskontinuierliche Daten. Ferner ist eine Kommunikationsrichtung eingezeichnet, welche Dual Simplex oder bidirektional sein kann. Die gezeigten Netzwerkknoten können kombiniert werden, wie es beispielhaft in Figur 3 gezeigt ist, können aber auch in einer anderen Anordnung bzw. Topologie Einsatz finden und so das vorgeschlagene Datentransportsystem schaffen.

Es kann damit eine Funktionsfamilie definiert werden die vereinfacht aus drei Funktionseinheiten besteht. Diese Funktionseinheiten können wie folgt beschrieben werden:
1. Einem reinen Gateway (G) (auch benennbar als Transceiver) das Stream und/ oder Burst Daten verpacken/entpacken kann
2. Einem reinen Router (R) bzw. m x n Crossbar ( $m , n ∈ ℕ$) die Daten in beliebige Richtung routen kann.
3. Einem m x n Gateway-Router (G/R) ( $m , n ∈ ℕ$) der sowohl Daten in beliebige Richtung routen kann sowie Stream und/ oder Burst Daten verpacken/entpacken kann.

Es sind beliebige weitere Kombination, aufgrund des oben beschriebenen Konzepts, möglich. Die gezeigten Funktionseinheiten sollen einen Einblick in die Flexibilität der Architektur geben.

Figur 3 zeigt die vorgeschlagene Datentransportanordnung bzw. das Datentransportsystem, welches gemäß dem vorgeschlagenen Verfahren betrieben wird. Besonders vorteilhaft finden hier die Komponenten aus Figur 2 Verwendung. Das Datentransportsystem findet im Automobil Einsatz.

CPU1 und CPU2 können mittels dem jeweiligen 1x2-Gateway-Router (1) und (2) über PCI Express bidirektional kommunizieren und ebenfalls Gateway (3) über PCI-Express, ebenfalls bidirektional, ansprechen. Simultan dazu können von CPU1 Video-Daten über HDMI und DisplayPort in den 1x2-Gateway-Router (1) eingespeist werden, die dann als DSI an Gateway (4) und eDisplayPort an Gateway (7) wieder ausgegeben werden können. Darüber hinaus kann CPU2 mittels bidirektionaler MII Schnittstelle an dem 1x2-Gateway-Router (2) die Gateways (4) und (6) sowie den Router (5) bedienen. Router (5) zeigt ein ungenutztes serielles Interface welches z.B. für spätere Erweiterungen des Netzwerks genutzt werden kann.

Das dargestellte Netzwerk ist als exemplarischer Aufbau zu verstehen. Es sind beliebig komplexe Netzwerke mit allen denkbaren Applikationsschnittstellen in allen Richtungen denkbar.

Durch die vorgestellten Gateways, Router und Gateway-Router werden völlig neue Netzwerk- und Datenarchitekturen im Fahrzeug möglich, da es einen einheitlichen Transportlayer gibt, der alle bestehenden Interfaces in jede Richtung zu jedem Gateway/Router/Gateway-Router, selbst mit niedrigsten Latenzanforderungen und zudem optimaler Ausnutzung der Bandbreite, leiten, bündeln und zusätzlich bei Bedarf ein "Interface-Bridging" (vorausgesetzt gleicher Datentyp z.B. bei dem Datentyp Video ein DisplayPort Input an einem Gateway auf DSI Output an einem anderen Gateway) vornehmen kann.

Zusätzlich dazu können im Fahrzeug damit Steckverbindungen, Kabel, Gewicht, elektrische Energie und letztlich Kosten durch die Bündelung gespart werden.

Die Fehleranfälligkeit eines solchen gebündelten Netzwerks ist denkbar geringer gegenüber vielen einzelnen Point-to-Point Verbindungen. Außerdem kann eine Fehler-Diagnose in einem Netzwerk wie dem vorgestellten durch die Bündelung ebenfalls stark vereinfacht werden.

Das gezeigte Netzwerk dieses Aufbaus kann, durch den Einsatz eines Routers/Gateway-Routers, einfach erweitert werden und eröffnet dadurch z.B. neue Möglichkeiten für Modellpflege und Ausstattungsoptionen.

### Unterschicht des physikalischen Mediums

### Zweck und Funktion

Die Unterschicht des physikalischen Mediums ist elektrisch mit dem physikalischen Übertragungsmedium verbunden. Das primäre Übertragungsmedium ist eine differentielle 100-Ohm-Leitung. Optional kommen aber auch optische Übertragungsmedien in Betracht.

Das physikalische Übertragungsformat ist abhängig von der Datenrate und ist entweder NRZ bei niedrigen Datenraten oder PAM4 bei hohen Datenraten.

Diese Schicht implementiert die Serialisierung der M-Bit-parallelen zeilenkodierten Daten (M = raw serializer bit width) auf der Sendeseite und die Wiederherstellung des seriellen Takts und der bitseriellen Daten sowie die Deserialisierung zu M-bitparallele zeilenkodierte Wörter auf der Empfangsseite. Die serielle Datenübertragung basiert auf dem Konzept der "Embedded Clock", d. h. es wird keine Zeit übertragen, sondern nur serielle Daten, die aufgrund der Leitungskodierung eine Zeitrückgewinnung ermöglichen.

Die Kernzeitfrequenz wird hauptsächlich durch die "Raw Bit Width" M des SERDES bestimmt. Bei 30 GBps und einer Rohbitbreite von M=128 ergibt sich beispielsweise eine Kerntaktfrequenz von 234,375 MHz.

### Schnittstelle zum physikalischen Medium

In Richtung des Übertragungsmediums implementiert die Teilschicht des physikalischen Mediums gemäß einem Aspekt der vorliegenden Erfindung zwei unidirektionale, differenzielle, bitserielle 100-Ohm-Schnittstellen. Eine Sende- und eine Empfangsschnittstelle. Das physikalische Medium besteht durchweg aus einer differentiellen Hin- und einer differentiellen Rückleitung. Diese Anordnung ermöglicht auch den optionalen Betrieb optischer Medien ohne große Anpassungsschaltungen.

Für das physikalische Medium liegt der Fokus auf Twisted-Pair-Kabeln, da die Einfügungsdämpfung von Koaxialkabeln bei höheren Frequenzen gleich der Einfügungsdämpfung von Twisted-Pair-Kabeln ist. Berücksichtigt man die 6dB Dämpfung der Single-Ended-Übertragung gegenüber der differentiellen Übertragung, bleibt für Koaxialkabel absolut kein Vorteil übrig.

Die maximale Kabellänge ist abhängig von der Datenrate (und dem Kabeldurchmesser).

In Senderichtung wird gemäß einem Aspekt der vorliegenden Erfindung ein Bitzeitsystem zur Serialisierung der Daten mit Hilfe einer PLL erzeugt. Mit dieser Bitzeit werden die Daten/Symbole gesendet. Diese Bitzeit bildet die Grundlage für das synchrone Tx-Taktsystem. Der Tx-Datenpfad ist diesem Zeitsystem entgegengerichtet. (Ziel synchron)

In Empfangsrichtung wird die zur Serialisierung der Daten verwendete Zeit mit Hilfe eines CDR aus dem empfangenen seriellen Datenstrom zurückgewonnen. Diese Zeit bildet die Grundlage für das synchrone Rx-Taktsystem. Der Rx-Datenpfad ist in die gleiche Richtung wie dieses Zeitsystem gerichtet (Quelle synchron).

A sagte, dass die Kerntaktfrequenz hauptsächlich durch die "Raw Bit Width" M des SERDES bestimmt wird. Bei 30 GBps und einer Rohbitbreite von M=128 ergibt sich beispielsweise eine Kerntaktfrequenz von 234,375 MHz. Da SERDES-Technologien variieren können, wird auch M variieren. Folglich müssen das Zellformat und die Zelldatenschnittstellen zwischen den verschiedenen Schichten flexible rohe SERDES-Bitbreiten unterstützen, bzw. das Zellformat muss von der Zellzeilendatenbreite entkoppelt sein.

### Transmission Sublayer

### Zweck und Funktion

Die Übertragungsunterschicht generiert gemäß einem Aspekt der vorliegenden Erfindung aus den N-Bit breiten Übertragungsrahmen (siehe: 7. Übertragungsrahmen und Zellenformat) in Senderichtung die M-Bit breiten Symbole des Leitungscodes für die SERDES-Rohschnittstelle und generiert die N-Bit breiten Senderahmen wieder aus den M-Bit-Symbolen der SERDES-Rohschnittstelle in Empfangsrichtung.

Die Hauptfunktion der Übertragungsteilschicht ist das Zusammensetzen der Übertragungsrahmen aus den Zellen in Senderichtung und umgekehrt, in Empfangsrichtung, das Zerlegen der Übertragungsrahmen in Zellen.

Um die Datenrate des Zellstroms an die Datenrate der seriellen Übertragung anzupassen, kann dieser Layer gemäß einem Aspekt der vorliegenden Erfindung Leerzellen in Senderichtung (von der Anwendungsschnittstelle zum Serializer) einfügen. Die Verfügbarkeit von Zellen hängt von den gesamten Bandbreitenanforderungen aller Anwendungsschnittstellen ab. Somit bilden die Zellen gemäß einem Aspekt der vorliegenden Erfindung keinen kontinuierlichen Zellenfluss, da die Zellen mit Kerntakt verarbeitet (gesammelt, zusammengesetzt und zusammengeführt) werden, der die max. Bandbreite des SERDES.

In Empfangsrichtung (vom Deserialisierer zu den Anwendungsschnittstellen) werden hier die leeren Zellen verworfen. Zellen werden aus dem seriellen Rahmen extrahiert. Da ähnlich wie in Senderichtung die Zelldatenrate kleiner als die Bandbreite bezogen auf die Kernzeit ist, werden diese Zellen mit einem Datengültigkeitssignal weitergeleitet.

Diese Schicht behandelt den Fluss der Zellen. Neben der Generierung der Zellheader und CRCs bzw. der Extraktion mit CRC-Prüfung der Daten aus den Zellen ist hier eine sogenannte Add-Drop-Multiplexer-Funktion implementiert.

Dies bedeutet, dass in Senderichtung die Zellen von den verschiedenen Dienstfunktionen gesammelt, mit einer VP-Kennung versehen, Zellkopf und -fuß erzeugt werden und von der Peer-to-Peer-Schnittstelle gesammelt werden und dann in einen gemeinsamen Zellstrom gemultiplext (Add-Funktion) werden.

In Empfangsrichtung wird der Zellenstrom gemäß einem Aspekt der vorliegenden Erfindung gemäß der VP-Kennung von der Eingangsvorrichtung in Empfangsrichtung an die verschiedenen Dienstfunktionen und die Peer-to-Peer-Schnittstelle verteilt. Die Daten für die Servicefunktionen werden entpackt und CRC-geprüft (Drop-Funktion). Alle Zellen, deren VP-Kennung nicht zu einer Dienstfunktion gehört, werden an die Peer-to-Peer-Schnittstelle weitergeleitet (Forward-Funktion).

### Application Adaptation Layer(s) AAL

Die Anwendungsanpassungs- Teilschicht ist die "oberste" Schicht im dreischichtigen Modell. Hier werden die auf Zellen basierenden virtuellen Datenpfade wieder in physikalische Datenpfade umgewandelt. Diese werden über generische Dienstschnittstellen für Stream- oder Burst-Daten mit den verschiedenen Anwendungsschnittstellen verbunden.

Die Regeln zum Aufteilen und Wiederzusammensetzen von Paketen und Streams in Zellen werden Anwendungsanpassungsteilschichten genannt.

Die beiden wichtigsten sind Stream Data für beispielsweise Video- und Audiodaten und Burst Data für fast alle Arten von Paketen. Welche AAL jeweils verwendet wird, ist in der Zelle nicht kodiert. Stattdessen wird es zwischen zwei Endpunkten konfiguriert oder basierend auf einer virtuellen Verbindung vereinbart.

### Segmentation & Re-Assembly Sublayer (mit AAL Funktion)

### Zweck und Funktion

In Senderichtung implementiert die Segmentierungsschicht zusammen mit der anwendungsspezifischen AAL-Funktion gemäß einem Aspekt der vorliegenden Erfindung den Ausgangspunkt für die zellbasierten virtuellen Datenpfade.

In Empfangsrichtung implementiert die Reassemblierungsschicht zusammen mit der anwendungsspezifischen AAL-Funktion den Endpunkt für die zellbasierten virtuellen Datenpfade.

Die Hauptaufgabe der Segmentierungs- & Re-Assembly Teilschicht (zusammen mit der anwendungsspezifischen AAL-Funktion) besteht darin, die Formatumwandlung (bitbreit) von gestreamten oder Burst-Daten mit einer beliebigen Bitbreite in das N-Bit breite Zellenzeilendatenformat zu ermöglichen.

Die Schnittstellen zwischen den Stream Data- oder Burst Data-Funktionen zur Segmentierungs- & Re-Assembly Teilschicht haben die Bitbreite der Zellenzeilen (N). Die Stream-Data- oder Burst-Data-AAL-Funktionen kombinieren die Taktdomänenüberquerung und die bitweite Umwandlung der Daten von der Anwendungsschnittstelle zu den N Bits der Zellenzeilen. Dabei ist die Zellzeilennutzlast bereits so formatiert, dass Zellfuß und -kopf in die erste und letzte Zellzeile passen.

Die Teilschicht Segmentierung & Re-Assembly steuert grundsätzlich den Datenfluss durch die AAL-Funktionen. Es bewertet die Verfügbarkeit von Anwendungsdaten und (eventuell) die Akzeptanz von Zelldaten (zu definierender Gegendruck).

Die Zellen bieten gemäß einem Aspekt der vorliegenden Erfindung die Möglichkeit, Nutzlastinformationsdaten zusätzlich zu Nutzlastdaten zu übertragen. (Siehe 7.1 Zellenformat). Die Nutzinformationsdaten werden beispielsweise zur Generierung von Rahmensignalen für Video oder Audio im Falle von Stream-Daten und zur Generierung von Paketen, Transaktionen oder Bursts im Falle von Burst-Daten verwendet.

### Binden von Rahmensignalen, um Daten mit den Nutzlastinformationen zu streamen

Die Grundidee der Anbindung von Frame-Signalen an den Datenstrom besteht darin, einen signifikanten Ankerpunkt (oder mehrere Ankerpunkte) im Frame-Timing zu definieren und diesen (oder diese) mittels der Payload-Info-Bits so zu übertragen, dass eine eindeutige Synchronisation von Datenstrom und Rahmensignalen möglich ist. Idealerweise geschieht dies, indem ein Fixpunkt des Datenstroms an einem Fixpunkt in der markierten Datenzelle platziert wird. Zur Wiederherstellung des Frame-Timings wird ein freilaufender Timing-Generator verwendet, der das gesamte Timing selbstständig erzeugen kann. Die Anpassung des Timings an den Datenstrom erfolgt nun durch Auswertung der Payload-Info-Bits und die Anpassung des Timings an die definierte Stelle in der Datenzelle.

### Stream data (kontinuierlicher Datenstrom)

Die Stream Data-Schnittstelle kombiniert die Überschreitung von der Applikationstakt Domäne in die Zelltakt Domäne und die Umwandlung der Bitbreite von Daten von der Anwendungsschnittstelle zu den N Bits der Zellenzeilen. Dabei ist die Zellzeilennutzlast bereits so vorformatiert, dass Zell Footer und Header in die erste und letzte Zellzeile passen.

Streaming-Daten sind (normalerweise) quellensynchron. Hier wird die Taktdomänenüberquerung (clock domain crossing) des Datenpfads von der Applikationstakt Domäne zur Zelltakt Domäne durchgeführt.

In Senderichtung ist ein Datenpuffer vorgesehen, in den die quellensynchronen Daten mit dem Applikationstakt geschrieben werden. Die Eingangsvorrichtung in Senderichtung ruft die Daten aus diesem Puffer nach Bedarf ab, um die Datenformatumwandlung in die N Bit breiten Reihen der Zellen durchzuführen. Rahmensignale (z. B.: Hsync, Vsync, DE) werden in Payload Info Bits kodiert, sodass auf der Empfängerseite eine Rekonstruktion der Rahmensignale möglich ist. In der Empfangsrichtung werden die Zellendaten von der Ausgangsvorrichtung in Empfangsrichtung in einen Datenpuffer geschrieben. Basierend auf den Payload Info Bits werden die Rahmensignale rekonstruiert. Der Applikationstakt der Sendeseite wird zum Beispiel unter Verwendung von Pufferfüllstand und Taktsynthese regeneriert.

Ist eine Verschlüsselung der Daten erforderlich (HDCP), werden in dieser Funktion die Zelldaten verschlüsselt bzw. entschlüsselt.

Aufgrund der unterschiedlichen Arten von Stream-Daten, wie z. B.: Audio, Video mit und ohne Verschlüsselung, kann es unterschiedliche Implementierungen dieser Grundfunktion geben (z. B.: VStream In/Out; AStream In/Out; EncVStream In/Out).

### Burst data (diskontinuierlicher Datenstrom)

Die Burst-Daten-Schnittstelle kombiniert die Überschreitung von der Applikationstakt Domäne in die Zelltakt Domäne und die Umwandlung der Bitbreite von Burst-Daten von der Anwendungsschnittstelle zu den N Bits der Zellenzeilen. Dabei ist die Zellzeilennutzlast bereits so vorformatiert, dass Zell Footer und Header in die erste und letzte Zellzeile passen..

Burst-Daten sind (normalerweise) synchron zu einem externen Takt und haben unterschiedliche Kennzeichnungssignale für Richtung und Datentyp (Adresse / Daten / ByteEnable).

Diese Daten werden normalerweise von Steuerleitungen begleitet, um ein bestimmtes Protokoll zu realisieren.

In Senderichtung ist ein Datenpuffer vorgesehen, in den die Burstdaten mit dem Schnittstellentakt geschrieben werden. Die Eingangsvorrichtung in Senderichtung ruft die Daten aus diesem Puffer nach Bedarf ab, um die Datenformatumwandlung in die N Bit breiten Reihen Zellen durchzuführen.

In der Empfangsrichtung werden die Zellendaten von der Ausgangsvorrichtung in Empfangsrichtung in einen Datenpuffer geschrieben. Basierend auf den Payload Info Bits werden die Schnittstellensteuersignale rekonstruiert.

Die Payload-Info-Bits werden verwendet, um die Steuersignale der anwendungsspezifischen Schnittstellen zu erzeugen oder die Protokollzustandsmaschinen in den anwendungsspezifischen Schnittstellen zu synchronisieren.

Aufgrund der unterschiedlichen Schnittstellen, die Burst-ähnliche Daten bereitstellen (SPI, I2C, MII), kann es unterschiedliche Implementierungen dieser Grundfunktion geben (z. B.: SPIBurst, I2CBurst, MIIBurst).

Dementsprechend wird es auch (leicht) unterschiedliche Stream In/Out-Schnittstellen geben, deren Struktur jedoch gleich sein sollte.

### Zellformat/ Rahmenformat

Die Zelle besteht gemäß einem Aspekt der vorliegenden Erfindung aus einem Header mit fester Bitlänge, einem Payload-Bereich mit 4 wählbaren Bitlängen und einem Footer wiederum mit fester Bitlänge.

Die Zellstruktur ist eine Folge von Bits wie folgt:
- Eine virtuelle 7-Bit-Pfadkennung (VP), die eine eindeutige Adresse des virtuellen Pfads darstellt.
- Eine 3-Bit-Sequenznummer (SN), die die Zellen fortlaufend in ihrer Reihenfolge nummeriert.
- Eine 2 Bit breite Cell Type (CT)-Kennung, die die Länge der Nutzdaten angibt.
- Eine 3 Bit breite Payload Information (PI), die zusätzliche Informationen über die Nutzlast enthält. Dies kann auch zur Synchronisation von Nutzdaten und Rahmendaten oder Steuerdaten verwendet werden.
- Ein 10 Bit breites CRC-Polynom (HCRC) zum Fehlerschutz der Header-Informationen. Das Polynom hat bis zu einer Bitfolge von 21 Bit (P=0x2B9) eine Hamming-Distanz von 5.
- Der Payload (PL)-Bereich hat eine Länge von: 187, 411, 635 oder 859 Bit, abhängig vom CT-Wert. Die kürzeste Nutzlast wird so gewählt, dass sie immer noch größer ist als die größte unterstützte (Video-)Streaming-Busbreite. (Sollte die Abbildung von Stromdaten auf die Zellennutzlast vereinfachen).
- Abschließend ein 12 Bit breites CRC-Polynom (PCRC) zum Fehlerschutz der Nutzdaten. Das Polynom hat bis zu einer Bitfolge von 2035 Bit (P=0x8F3) eine Hamming-Distanz von 4.

### Format der Übertragungsrahmen

Der Übertragungsrahmen besteht gemäß einem Aspekt der vorliegenden Erfindung aus einer Folge von M-Bit breiten Wörtern. Der Rahmen beginnt mit einem M-Bit breiten "Komma"-Wort aus einer definierten Folge von Kommawörtern für die Rahmenausrichtung. Dann folgt K Zellen. Die Zellen bestehen aus 2, 4, 6 oder 8 N-Bit breiten Wörtern, die Header, Payload und Footer tragen. Diese N-Bit breiten Wörter werden zu M-Bit breiten Symbolen codiert (Zeilenkodierung).

Dieses Format wird gewählt, um die Verarbeitung von Zellendaten bei angemessenen Zeitfrequenzen zu ermöglichen, vorausgesetzt, dass der Serialisierer/ Deserialisierer immer einen Block von M Bits verarbeitet.

## Patentansprüche

1. Verfahren zum Betreiben eines universellen Datentransportsystems für Fahrzeugarchitekturen, aufweisend:
- ein Unterteilen (100) mindestens eines physischen Datenkanals in jeweils eine Mehrzahl von virtuellen Datenkanälen, wobei die virtuellen Datenkanäle jeweils ausschließlich für kontinuierliche oder diskontinuierliche Datensätze eingerichtet werden;
- ein Auslesen (101) von Nutzdaten in einem Sender des Datentransportsystems;
- ein Hinzufügen (102) von Beschreibungsdaten, welche die Nutzdaten beschreiben, zu den Nutzdaten gemäß einem Zieldatenformat zur Erstellung mindestens eines Datensatzes;
- ein Übersenden (103) des mindestens einen Datensatzes mittels der virtuellen Datenkanäle von dem Sender zu einem Empfänger anhand einer statischen Adressierung; und
- ein Empfangen (104) des mindestens einen Datensatzes in dem Empfänger und Auslesen der Nutzdaten zu deren Verwendung, **dadurch gekennzeichnet, dass** das Verfahren ausschließlich flüchtige Speicher verwendet.

2. Verfahren nach Anspruch 1, **dadurch gekennzeichnet, dass** die Anzahl der virtuellen Datenkanäle je physischem Datenkanal maximal 128 ist.

3. Verfahren nach Anspruch 1 oder 2, **dadurch gekennzeichnet, dass** für jeden virtuellen Datenkanal gesondert eine Bandbreite allokiert wird.

4. Verfahren nach einem der vorhergehenden Ansprüche, **dadurch gekennzeichnet, dass** alle virtuellen Datenkanäle mindestens zeitweise in einem Duplexmodus betrieben werden.

5. Verfahren nach einem der vorhergehenden Ansprüche, **dadurch gekennzeichnet, dass** je Kommunikationsrichtung physische und/ oder virtuelle Datenkanäle unterschiedlicher Anzahl vorliegen.

6. Verfahren nach einem der vorhergehenden Ansprüche, **dadurch gekennzeichnet, dass** virtuelle Datenkanäle unabhängig voneinander priorisiert werden.

7. Verfahren nach einem der vorhergehenden Ansprüche, **dadurch gekennzeichnet, dass** Netzwerkknoten des Datentransportsystems wechselnd als Sender oder Empfänger agieren.

8. Verfahren nach einem der vorhergehenden Ansprüche, **dadurch gekennzeichnet, dass** die Nutzdaten in dem Empfänger mittels einer Ausgabeeinheit ausgegeben werden und/ oder der Empfänger eine Datensenke darstellt.

9. Verfahren nach einem der vorhergehenden Ansprüche, **dadurch gekennzeichnet, dass** die Nutzdaten als Videodaten und/ oder Audiodaten vorliegen.

10. Datentransportsystem
für Fahrzeugarchitekturen, aufweisend:
- eine Unterteilungseinheit eingerichtet zum Unterteilen (100) mindestens eines physischen Datenkanals in jeweils eine Mehrzahl von virtuellen Datenkanälen, wobei die virtuellen Datenkanäle jeweils ausschließlich für kontinuierliche oder diskontinuierliche Datensätze eingerichtet sind;
- eine Schnittstelleneinheit eingerichtet zum Auslesen (101) von Nutzdaten in einem Sender des Datentransportsystems;
- eine Paketierungseinheit eingerichtet zum Hinzufügen (102) von Beschreibungsdaten, welche die Nutzdaten beschreiben, zu den Nutzdaten gemäß einem Zieldatenformat zur Erstellung mindestens eines Datensatzes;
- eine Sendeschnittstelleneinheit eingerichtet zum Übersenden (103) des mindestens einen Datensatzes mittels der virtuellen Datenkanäle von dem Sender zu einem Empfänger anhand einer statischen Adressierung; und
- eine Empfangsschnittstelleneinheit eingerichtet zum Empfangen (104) des mindestens einen Datensatzes in dem Empfänger und Auslesen der Nutzdaten zu deren Verwendung, **dadurch gekennzeichnet, dass** das Datentransportsystem ausschließlich flüchtige Speicher verwendet.

11. Computerprogrammprodukt, umfassend Befehle, die bei der Ausführung des Programms durch mindestens einen Computer diesen veranlassen, die Schritte des Verfahrens nach einem der Ansprüche 1 bis 9 auszuführen.

12. Computerlesbares Speichermedium, umfassend Befehle, die bei der Ausführung durch mindestens einen Computer diesen veranlassen, die Schritte des Verfahrens nach einem der Ansprüche 1 bis 9 auszuführen.

## Claims

1. A method for operating a universal data transport system for vehicle architectures, comprising:
- dividing (100) at least one physical data channel into a plurality of virtual data channels, wherein the virtual data channels are each configured exclusively for continuous or discontinuous data sets;
- reading (101) payload data at a transmitter of the data transport system;
- adding (102) description data, which describes the payload data, to the payload data in accordance with a target data format to create at least one data set;
- transmitting (103) the at least one data record via the virtual data channels from the sender to a receiver using static addressing; and
- receiving (104) the at least one data record in the receiver and reading out the payload data for use, **characterized in that** the method uses only volatile memory.

2. The method according to claim 1, **characterized in that** the number of virtual data channels per physical data channel is at most 128.

3. The method according to claim 1 or 2, **characterized in that** a bandwidth is allocated separately for each virtual data channel.

4. The method according to any of the preceding claims, **characterized in that** all virtual data channels are operated in a duplex mode at least intermittently.

5. The method according to any of the preceding claims, **characterized in that** there are different numbers of physical and/or virtual data channels for each communication direction.

6. The method according to any of the preceding claims, **characterized in that** virtual data channels are prioritized independently of one another.

7. The method according to any of the preceding claims, **characterized in that** network nodes of the data transport system alternately act as transmitters or receivers.

8. The method according to any of the preceding claims, **characterized in that** the payload data is output at the receiver by means of an output unit and/or the receiver acts as a data sink.

9. The method according to one of the preceding claims, **characterized in that** the payload data consists of video data and/or audio data.

10. A data transport system for vehicle architectures, comprising:
- a partitioning unit configured to partition (100) at least one physical data channel into a plurality of virtual data channels, wherein the virtual data channels are each configured exclusively for continuous or discontinuous data sets;
- an interface unit configured to read (101) payload data from a transmitter of the data transport system;
- a packetization unit configured to add (102) description data, which describes the payload data, to the payload data in accordance with a target data format to create at least one data set;
- a transmission interface unit configured to transmit (103) the at least one data set via the virtual data channels from the transmitter to a receiver using static addressing; and
- a receive interface unit configured to receive (104) the at least one data record at the receiver and read out the payload data for use.

11. A computer program product comprising instructions that, when the program is executed by at least one computer, cause the computer to perform the steps of the method according to any one of claims 1 through 9.

12. A computer-readable storage medium comprising instructions that, when executed by at least one computer, cause it to perform the steps of the method according to any one of claims 1 through 9.

## Revendications

1. Procédé d'exploitation d'un système universel de transport de données pour architectures de véhicules, comprenant :
- une subdivision (100) d'au moins un canal de données physique en une pluralité de canaux de données virtuels, les canaux de données virtuels étant chacun configurés exclusivement pour des ensembles de données continus ou discontinus ;
- une lecture (101) de données utiles dans un émetteur du système de transport de données ;
- l'ajout (102) de données de description, qui décrivent les données utiles, aux données utiles selon un format de données cible afin de créer au moins un enregistrement de données ;
- une transmission (103) dudit au moins un ensemble de données au moyen des canaux de données virtuels, de l'émetteur vers un récepteur, sur la base d'un adressage statique ; et
- la réception (104) dudit au moins un enregistrement de données dans le récepteur et la lecture des données utiles en vue de leur utilisation, **caractérisé en ce que** le procédé utilise exclusivement des mémoires volatiles.

2. Procédé selon la revendication 1, **caractérisé en ce que** le nombre de canaux de données virtuels par canal de données physique est au maximum de 128.

3. Procédé selon la revendication 1 ou 2, **caractérisé en ce qu'**une bande passante est allouée séparément pour chaque canal de données virtuel.

4. Procédé selon l'une des revendications précédentes, **caractérisé en ce que** tous les canaux de données virtuels fonctionnent, au moins temporairement, en mode duplex.

5. Procédé selon l'une des revendications précédentes, **caractérisé en ce que**, pour chaque sens de communication, il existe un nombre différent de canaux de données physiques et/ou virtuels.

6. Procédé selon l'une des revendications précédentes, **caractérisé en ce que** les canaux de données virtuels sont hiérarchisés indépendamment les uns des autres.

7. Procédé selon l'une des revendications précédentes, **caractérisé en ce que** les nœuds de réseau du système de transport de données agissent alternativement en tant qu'émetteurs ou récepteurs.

8. Procédé selon l'une des revendications précédentes, **caractérisé en ce que** les données utiles sont transmises au niveau du récepteur au moyen d'une unité de sortie et/ou **en ce que** le récepteur constitue un collecteur de données.

9. Procédé selon l'une des revendications précédentes, **caractérisé en ce que** les données utiles se présentent sous forme de données vidéo et/ou de données audio.

10. Système de transport de données pour architectures de véhicules, comprenant :
- une unité de subdivision agencée pour subdiviser (100) au moins un canal de données physique en une pluralité de canaux de données virtuels, les canaux de données virtuels étant chacun exclusivement destinés à des ensembles de données continus ou discontinus ;
- une unité d'interface agencée pour lire (101) des données utiles dans un émetteur du système de transport de données ;
- une unité de mise en paquets agencée pour ajouter (102) aux données utiles des données de description décrivant lesdites données utiles, conformément à un format de données cible, afin de créer au moins un enregistrement de données ;
- une unité d'interface d'émission agencée pour transmettre (103) ledit au moins un enregistrement de données au moyen des canaux de données virtuels, de l'émetteur vers un récepteur, sur la base d'un adressage statique ; et
- une unité d'interface de réception agencée pour recevoir (104) ledit au moins un enregistrement de données au niveau du récepteur et pour extraire les données utiles en vue de leur utilisation.

11. Produit logiciel comprenant des instructions qui, lors de l'exécution du programme par au moins un ordinateur, amènent celui-ci à exécuter les étapes du procédé selon l'une des revendications 1 à 9.

12. Support de stockage lisible par ordinateur, comprenant des instructions qui, lors de leur exécution par au moins un ordinateur, amènent celui-ci à exécuter les étapes du procédé selon l'une des revendications 1 à 9.
